# DEMANDE DE BREVET EUROPEEN

(11) **EP 4 400 350 A2**
(43) Date de publication de la demande: **17.07.2024**
(21) Numéro de dépôt: 23203070.0
(22) Date de dépôt: 11.10.2023
(51) Int. Cl.: B60K 35/10, B60K 35/22, B60K 35/28, G09B 21/00

(54) **DISPOSITIF D'AIDE À LA CONDUITE**

(30) Priorité: 11.10.2022 FR 2210391
(71) Demandeur: Pimas Orthopedie, 69120 Vaulx-en-Velin (FR)
(72) Inventeur: Masapollo, Tony, 69100 Villeurbanne (FR); Masapollo, Pascal, 01360 Bressolles (FR)
(74) Mandataire: LLR

(57) **Abrégé**

L'invention a pour objet un dispositif d'aide à la conduite (2) de véhicules roulants motorisés comprenant :
- au moins un organe de captation (4) d'au moins un son émis à l'intérieur du véhicule,
- au moins un organe de traitement sonore (8) configuré pour transcrire au moins un son capté en au moins un signal visuel, et
- au moins un organe de transmission du signal visuel (10) au conducteur.

## Description

L'invention concerne les dispositifs d'aide à la conduite d'un véhicule roulant motorisé, pendant un apprentissage ou lors d'une utilisation par un conducteur formé, plus particulièrement pour des personnes sourdes ou malentendantes.

Lors de la conduite d'un véhicule roulant motorisé, par exemple d'un véhicule automobile ou d'un véhicule de chantier, des difficultés de captation de sons ambiants peuvent être observées et avoir plusieurs causes :
- Insonorisation et capitonnage des habitacles toujours plus performants ;
- Surdité du conducteur : on déclare plus de 430 millions de personnes dans le monde atteintes de surdité nécessitant une assistance, avec une projection à 700 millions en 2050 ;
- Intégration d'applications téléphones au sein des ordinateurs de bord (musique, GPS, etc.) générant des distractions auditives additionnelles ;
- Etc.

Ces éléments, exacerbés dans une situation de déficience auditive profonde ou sévère du conducteur, rendent difficiles voire impossible l'apprentissage de la conduite et la conduite en autonomie par la suite en toute sécurité.

En cas de déficiences auditives, l'assimilation des instructions orales données par un moniteur est souvent impossible, la lecture labiale et la pratique de la langue des signes détournent le regard du conducteur. Il en est de même en cas de présence de passagers dans un véhicule souhaitant transmettre une information au conducteur.

Dans cette logique, et jusqu'à très récemment, la conduite pour personnes atteintes de déficiences auditives sévères ou profondes (catégories de permis de conduire C1, C1E, C, CE, D1, D1E, D et DE) ainsi que dans le cadre de la conduite professionnelle en permis (catégories de permis de conduire A1, A2, A, B, B1, BE (tels que les chauffeurs de taxi, les enseignants auto-école...)) était impossible. Des changements législatifs récents autorisent désormais la conduite aux personnes sourdes avec la réalisation d'aménagements au niveau du véhicule.

L'invention a notamment pour but de fournir un dispositif d'assistance aux conducteurs de véhicules roulants motorisés en cas de déficience auditive, partielles ou complètes, temporaires ou permanentes.

L'invention a pour objet un dispositif d'aide à la conduite de véhicules roulants motorisés comprenant :
- au moins un organe de captation d'au moins un son émis à l'intérieur du véhicule,
- au moins un organe de traitement sonore configuré pour transcrire au moins un son capté en au moins un signal visuel,
- au moins un organe de transmission du signal visuel au conducteur.

On entend par « véhicule roulant motorisé » un véhicule pouvant se déplacer par l'intermédiaire de roues et comprenant au moins un moteur permettant la mise en mouvement du véhicule.

Ainsi, le conducteur du véhicule roulant motorisé, qui pour les raisons susmentionnées n'entend pas un son intérieur, est averti de ce dernier par l'intermédiaire d'un dispositif palliant l'impossibilité de détection d'un son grâce à une sollicitation d'un autre sens, ici la vision. Dès lors, et que ce soit dans le cas d'une formation ou de la conduite autonome d'une personne sourde ou malentendante, ou dans le cadre d'un conducteur portant un dispositif le coupant de son environnement sonore, le dispositif d'aide à la conduite permet au conducteur d'obtenir des informations issues d'un son provenant de l'intérieur du véhicule, par exemple émis par une autre personne présente dans le véhicule.

Suivant d'autres caractéristiques optionnelles du dispositif d'aide à la conduite prises seules ou en combinaison :
- l'organe de captation d'au moins un son émis à l'intérieur du véhicule comprend au moins un microphone présent à l'intérieur du véhicule roulant motorisé ;
- le son émis à l'intérieur du véhicule est un message émis par un passager du véhicule roulant motorisé, en particulier un moniteur d'auto-école ;
- le dispositif d'aide à la conduite comprend en outre au moins un organe de captation d'au moins un son provenant de l'extérieur du véhicule roulant motorisé ;
- le son provenant de l'extérieur du véhicule est émis par un autre véhicule, en particulier par un véhicule d'urgence ;
- l'organe de captation d'un son provenant de l'extérieur du véhicule comprend au moins un microphone présent à l'extérieur du véhicule roulant motorisé ;
- l'organe de traitement sonore et l'organe de transmission du signal visuel sont configurés pour indiquer au conducteur la direction d'émission du son capté ;
- l'organe de traitement sonore est configuré pour comparer le son capté à au moins une banque de signaux visuels ;
- l'organe de traitement sonore comprend une première unité de transcription d'au moins un son capté en au moins pictogramme et/ou en au moins un signe issu de la langue des signes française ;
- l'unité de transcription d'au moins un son capté en au moins un pictogramme et/ou en au moins un signe issu de la langue des signes française est configurée pour associer le pictogramme et/ou le signe issu de la langue des signes française à une taille et/ou une couleur différentes en fonction d'une nature du son capté, par exemple en fonction d'une intensité du son capté et/ou de la nature des mots captés ;
- l'organe de traitement sonore comprend une seconde unité de transcription de d'au moins un son capté en au moins une vibration ;
- la seconde unité de transcription d'au moins un son capté en au moins une vibration est configuré pour associer des vibrations différentes en fonction d'une nature du son capté, par exemple en fonction d'une intensité du son capté et/ou de la nature des mots captés ;
- la seconde unité de transcription d'au moins un son capté en au moins une vibration comprend au moins un vibreur dimensionné pour être inséré dans un volant, un siège conducteur et/ou un tapis de sol de véhicule roulant motorisé ; et
- l'organe de transmission du signal visuel comprend un écran, en particulier un afficheur tête haute.

L'invention a également pour objet un procédé d'aide à la conduite de véhicules roulants motorisés dans lequel :
- au moins un son émis à l'intérieur du véhicule est capté par au moins un organe de captation d'un son,
- le son capté est transcrit par au moins un organe de traitement sonore en au moins un signal visuel,
- le signal visuel est transmis au conducteur par au moins un organe de transmission du signal visuel.

Suivant d'autres caractéristiques optionnelles du procédé d'aide à la conduite prises seules ou en combinaison :
- au moins un message émis par un passager du véhicule roulant motorisé, en particulier un moniteur d'auto-école, est capté par au moins un microphone présent à l'intérieur du véhicule ;
- au moins un son émis depuis l'extérieur du véhicule roulant motorisé du véhicule, en particulier un son émis par un autre véhicule, par exemple un véhicule d'urgence, est capté par au moins un capteur sonore présent à l'extérieur du véhicule ;
- le son capté est transcrit en au moins un pictogramme et/ou au moins en un signe issu de la langue des signes française par comparaison du son capté à au moins un banque de signaux visuels ;
- le son capté est transcrit en au moins un pictogramme et/ou un signe issu de la langue des signes française de taille et/ou de couleur différente en fonction d'une nature du son capté, par exemple en fonction d'une intensité du son capté et/ou de la nature des mots captés ;
- Au moins un son capté est transcrit en au moins une vibration ;
- le son capté est transcrit en au moins une vibration spécifique en fonction d'un nature du son capté, par exemple en fonction d'une intensité du son capté et/ou de la nature des mots captés ;
- la vibration est transmise à l'aide d'au moins un vibreur inséré au niveau d'un volant, d'un siège conducteur et/ou un tapis de sol de véhicule roulant motorisé ;
- le signal visuel est affiché sur un organe d'affichage d'un signal visuel, en particulier un afficheur tête haute ; et
- l'organe de transmission du signal visuel indique au conducteur la direction d'émission du son capté.

L'invention a également pour objet un véhicule roulant motorisé comprenant un dispositif d'aide à la conduite selon l'invention, en particulier un véhicule automobile.

### Brève description des figures

L'invention sera mieux comprise à la lecture de la description qui va suivre donnée uniquement à titre d'exemple et faite en se référant aux dessins annexés dans lesquels :

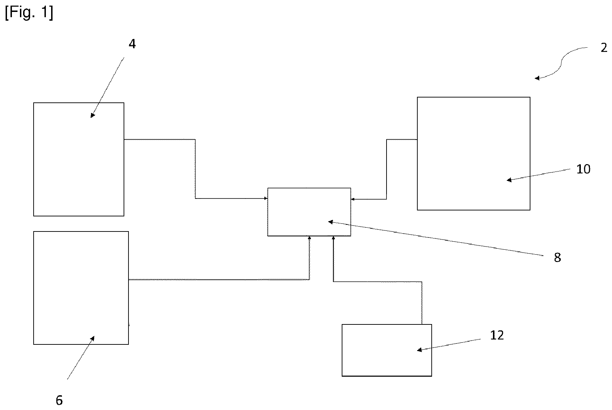

[Fig. 1] est une représentation schématique du dispositif d'aide à la conduite selon l'invention.

### Description détaillée

On se réfère désormais à la figure 1 illustrant un dispositif d'aide à la conduite 2 selon l'invention. Ce dernier comprend au moins un organe de captation d'au moins un son émis à l'intérieur du véhicule, au moins un organe de traitement sonore 8 (par exemple un boîtier dans l'habitacle du véhicule) configuré pour transcrire au moins un son capté en au moins un signal visuel, au moins un organe de transmission du signal visuel 10 (par exemple un afficheur tête haute, un écran placé au niveau du tableau de bord, un afficheur présent au niveau du pare-brise, etc.) au conducteur.

Selon un mode de réalisation de l'invention, et grâce à un ou des microphones 4 placés au sein du véhicule, le passager, par exemple un moniteur d'auto-école ou le client d'un taxi, peut donner une instruction orale au conducteur. L'instruction peut dès lors être traduite en pictogramme ou encore en signe issu de la langue des singes française, par exemple grâce à un logiciel de reconnaissance vocale implémenté dans l'organe de traitement sonore 8. Le résultat de la transcription peut dès lors être affiché sur un écran placé en face du conducteur, de préférence un afficheur tête haute qui n'obstrue pas son champ de vision. Le placement des microphones peut dépendre du placement dans la voiture des personnes dont on souhaite capter le son (à l'avant ou à l'arrière du véhicule).

L'organe de traitement sonore 8 peut comprendre au moins un microphone 4 intégré sur une carte électronique comprenant également des moyens de stockage d'un logiciel de reconnaissance vocale et une première unité de transcription sonore. Cette dernière est configurée pour identifier au moins un mot prononcer par un passager du véhicule. Une fois identifié, le ou les mots identifiés sont comparés à une banque de signaux visuels tels que ceux décrits ci-dessus. Ces signaux visuels ont été préalablement associés à un ou plusieurs mots. La comparaison des mots identifiés avec ceux associés à des signaux visuels permet alors d'associer les mots identifiés aux signaux visuels correspondants.

Il est possible que l'unité de transcription d'au moins un son capté en au moins un pictogramme et/ou en au moins un signe issu de la langue des signes française soit configurée pour associer au moins un pictogramme et/ou au moins un signe issu de la langue des signes française à une taille et/ou une couleur différentes en fonction d'une nature du son capté, par exemple de la nature des mots identifiés. Dès lors, et notamment en cas d'urgence matérialisée par l'utilisation d'un ou des mots particuliers et/ou une intonation particulière, le conducteur est alerté par un ou des signaux visuels plus grands et/ou en couleur(s) plus vive(s).

Dans le cadre d'un apprentissage de la conduite, un moniteur d'auto-école peut utiliser le microphone 4 pour transmettre une instruction à un élève. En visualisant rapidement l'instruction donnée, par exemple « tournez à droite à la prochaine intersection » lors d'un cours de conduite et via pictogramme visible sur un afficheur, par exemple tête haute, l'élève, souffrant de déficience auditive, ne détourne pas son attention de la route et peut mettre suffisamment rapidement en place les actions nécessaires (activation du clignotant droit, vérification de l'environnement grâce aux rétroviseurs intérieur et extérieurs, vérification de l'angle mort angle mort, etc.).

Un autre exemple peut être celui du taxi auquel un client indique une direction depuis l'arrière du véhicule et difficilement audible, laquelle peut être retranscrite sur l'afficheur.

Avantageusement, le dispositif d'aide à la conduite 2 comprend également au moins un organe de captation d'au moins un son provenant de l'extérieur du véhicule roulant motorisé.

Grâce à un ou des capteurs sonores 6 (par exemple des microphones implantés sur des cartes électroniques) placés à l'extérieur du véhicule roulant motorisé captant des sons inhabituels, le conducteur peut voir apparaître, par exemple sur un afficheur tête haute, une alerte, par exemple sous forme d'un pictogramme, pouvant par exemple grossir à l'approche de l'événement. Les capteurs sonores 6 et l'unité de traitement sonore 8 peuvent permettre une géolocalisation du nouveau bruit et l'organe de transmission du signal visuel 10 peut indiquer sa provenance sur l'organe de transmission du signal visuel 10 par rapport au véhicule.

Un signal visuel peut être transmis au conducteur si le son émis dépasse d'un certain seuil le bruit de fond habituel ambiant (il s'agit donc de comparer le volume sonore capté à un seuil prédéterminé) et/ou par comparaison d'un son capté et identifié à une banque sonore (de manière analogue à la comparaison décrite plus haut).

Il est possible de détecter un véhicule d'urgence, par exemple un camion de pompier arrivant rapidement par l'arrière du véhicule roulant motorisé et projetant de doubler le véhicule roulant motorisé depuis la droite à vive allure. A son approche, une alerte visuelle peut être émise. Un pictogramme du véhicule en circulation peut être affiché, une adaptation de la taille et/ou de la couleur du pictogramme pouvant évoluer en fonction de l'approche du véhicule d'urgence.

Selon un autre exemple, un véhicule à proximité du véhicule roulant motorisé peut klaxonner, par exemple pour indiquer un danger au conducteur du véhicule roulant motorisé. Une icône en forme de klaxon peut dès lors être pour signaler l'avertissement.

En complément d'un affichage d'informations, il est également possible qu'au moins un organe de transmission d'un signal haptique 12, par exemple un ou des vibreurs, peut être inséré au niveau du volant, du siège conducteur et/ou un tapis de sol afin de transmettre une information au conducteur (vibration, par exemple localisée au niveau de la direction d'émission du son capté, variation de l'intensité de la vibration en fonction de l'intensité du son capté, etc.). Comme cela est le cas pour un son capté, l'organe de traitement sonore 8 d'un son capté en au moins une vibration comprend une seconde unité de transcription d'au moins un son capté en au moins une vibration, avantageusement configurée pour associer des vibrations différentes en fonction d'une nature du son capté, par exemple en fonction d'une intensité du son capté et/ou de la nature des mots captés.

L'invention a également pour objet un procédé d'aide à la conduite de véhicules roulants motorisés dans lequel :
- au moins un son émis à l'intérieur du véhicule est capté par au moins un organe de captation d'un son, par exemple par au moins un microphone,
- le son capté est transcrit par au moins organe de traitement sonore en au moins un signal visuel,
- le signal visuel est transmis au conducteur par au moins un organe de transmission du signal visuel, par exemple au moins un pictogramme et/ou au moins un signe issu de la langue des signes française par comparaison du son capté à au moins un banque de signaux visuels.

Comme expliqué plus haut, le procédé selon l'invention peut également permettre de capter un son émis depuis l'extérieur du véhicule roulant motorisé du véhicule, en particulier un son émis par un autre véhicule, par exemple un véhicule d'urgence, est capté par au moins un capteur sonore présent à l'extérieur du véhicule. Cela peut également être utile pour un opérateur travaillant en milieu bruyant et portant un dispositif de protection auditive, pour avertir l'opérateur des sons émis dans son environnement.

Le son capté peut également être transcrit en au moins une vibration. Le son capté peut être transcrit en au moins une vibration spécifique en fonction d'un nature du son capté, par exemple en fonction d'une intensité du son capté et/ou de la nature des mots captés. La vibration peut être transmise à l'aide d'au moins un vibreur inséré au niveau d'un volant, d'un siège conducteur et/ou un tapis de sol de véhicule roulant motorisé.

L'invention n'est pas limitée aux modes de réalisation présentés et d'autres modes de réalisation apparaîtront clairement à l'homme du métier.

### Liste de références

- 2 :: dispositif d'aide à la conduite
- 4 :: microphone
- 6 :: capteur sonore
- 8 :: organe de traitement sonore
- 10 :: organe de transmission du signal visuel
- 12 :: organe de transmission du signal haptique

## Revendications

1. Dispositif d'aide à la conduite (2) de véhicules roulants motorisés comprenant :
- au moins un organe de captation (4) d'au moins un son émis à l'intérieur du véhicule,
- au moins un organe de traitement sonore (8) configuré pour transcrire au moins un son capté en au moins un signal visuel, et
- au moins un organe de transmission du signal visuel (10) au conducteur.

2. Dispositif d'aide à la conduite (2) selon la revendication 1, dans lequel l'organe de captation d'au moins un son émis à l'intérieur du véhicule comprend au moins un microphone (4) présent à l'intérieur du véhicule roulant motorisé.

3. Dispositif d'aide à la conduite (2) selon l'une quelconque des revendications précédentes, dans lequel le son émis à l'intérieur du véhicule est un message émis par un passager du véhicule roulant motorisé, en particulier un moniteur d'auto-école.

4. Dispositif d'aide à la conduite (2) selon l'une quelconque des revendications précédentes, le dispositif d'aide à la conduite (2) comprenant en outre au moins un organe de captation (6) d'au moins un son provenant de l'extérieur du véhicule roulant motorisé ;

5. Dispositif d'aide à la conduite (2) selon l'une quelconque des revendications précédentes, dans lequel l'organe de traitement sonore (8) est configuré pour comparer le son capté à au moins une banque de signaux visuels.

6. Dispositif d'aide à la conduite (2) selon la revendication précédente, dans lequel l'organe de traitement sonore (8) comprend une première unité de transcription d'au moins un son capté en au moins pictogramme et/ou en au moins un signe issu de la langue des signes française, l'unité de transcription d'au moins un son capté en au moins un pictogramme et/ou en au moins un signe issu de la langue des signes française étant configurée pour associer le pictogramme et/ou le signe issu de la langue des signes française à une taille et/ou une couleur différentes en fonction d'une nature du son capté, par exemple en fonction d'une intensité du son capté et/ou de la nature des mots captés.

7. Dispositif d'aide à la conduite (2) selon l'une quelconque des revendications précédentes, dans lequel l'organe de traitement sonore (8) comprend une seconde unité de transcription de d'au moins un son capté en au moins une vibration.

8. Procédé d'aide à la conduite de véhicules roulants motorisés dans lequel
- au moins un son émis à l'intérieur du véhicule est capté par au moins un organe de captation (4) d'un son,
- le son capté est transcrit par au moins un organe de traitement sonore (8) en au moins un signal visuel,
- le signal visuel est transmis au conducteur par au moins un organe de transmission du signal visuel (10).

9. Procédé d'aide à la conduite selon la revendication 8, dans lequel au moins un message émis par un passager du véhicule roulant motorisé, en particulier un moniteur d'auto-école, est capté par au moins un microphone (4) présent à l'intérieur du véhicule.

10. Procédé d'aide à la conduite selon l'une quelconque des revendications 8 ou 9, dans lequel le son capté est transcrit en au moins un pictogramme et/ou au moins en un signe issu de la langue des signes française par comparaison du son capté à au moins une banque de signaux visuels.

11. Procédé d'aide à la conduite selon la revendication 10, dans lequel le son capté est transcrit en au moins un pictogramme et/ou un signe issu de la langue des signes française de taille et/ou de couleur différente en fonction d'une nature du son capté, par exemple en fonction d'une intensité du son capté et/ou de la nature des mots captés.

12. Procédé d'aide à la conduite selon l'une quelconque des revendications 8 à 11, dans lequel au moins un son capté est transcrit en au moins une vibration.
